(19) Europäisches Patentamt
European Patent Office
Office européen des brevets

(11) **EP 1 813 445 A1**

(12) **EUROPEAN PATENT APPLICATION**

(43) Date of publication:
**01.08.2007 Bulletin 2007/31**

(51) Int Cl.:
***B60C 11/00*** *(2006.01)*

(21) Application number: **07101234.8**

(22) Date of filing: **26.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **27.01.2006 US 341056**

(71) Applicant: **THE GOODYEAR TIRE & RUBBER COMPANY**
**Akron,**
**Ohio 44316-0001 (US)**

(72) Inventors:
• **Brown, Jack Edward, Jr.**
**Akron, Ohio 44303 (US)**
• **Song, Tao**
**Hudson, Ohio 44236 (US)**

(74) Representative: **Kutsch, Bernd**
**Goodyear S.A.,**
**Patent Department,**
**Avenue Gordon Smith**
**7750 Colmar-Berg (LU)**

(54) **Continuous variable pitching methods**

(57) A method of pitching a tread for a tire to achieve a satisfactory noise power spectrum is disclosed. It has the steps of selecting an upper extreme pitch ratio (u) and a lower extreme pitch ratio (*l*); permitting continuous variables of pitch ratios to exist between and including the upper extreme pitch ratio (u) and the lower extreme pitch ratio (*l*); and conducting an optimization of said continuous variables between and including the two selected extreme pitch ratios.

FIG-1

**EP 1 813 445 A1**

**Description**

Field of the Invention

This invention relates to reducing tread pattern noise and teaches a method for achieving lower noise levels in tires.

Background of the Invention

Tire generated noise is emitted as a tire rotates, with the sound created being transmitted into the passenger compartment and the surrounding environment. Vehicle manufacturers go to great engineering efforts to reduce or dampen the noises inside the vehicle, and many tout the quietness inside the vehicle as evidence of the quality and luxuriousness of the vehicle. Externally highways and roadways are building sound absorbing walls to reduce vehicle noise as it is a form of unwanted pollution affecting residential and commercial property values.

Most of the vehicle noise is created by the tread passing over the road surface. Other noises such as engine roar and large truck braking similarly contribute to this noise pollution. The goal is to continue growth and development while reducing these sources of noise.

Tire manufacturers in particular have devoted an entire science to studying the behavior of tread pattern noise characteristics. In a technical report entitled "Tread Pitch Arrangement Optimization Through the Use of a Genetic Algorithm", by K.M. Hoffmeister and J.E. Bernard, published in the Tire Science and Technology, TSTCA, Vol 26 No 1, Jan-Mar 1998, pages 2-22, the authors provide a rather complete historical overview of vehicle noise including tire noise and an explanation of the underlying science of tread pattern noise reduction techniques used for the last 60 to 70 years.

The authors had a primary goal to introduce a new approach to tire tread pitch sequence optimization through the application of a genetic algorithm. Mechanical Frequency Modulation (MFM) according to the authors was considered an example of providing optimization to a structured pitch sequence. In that regard, the authors selected a variety of tires employing noise reducing pitch sequences and showed how they could alter the pre-existing sequencing or even generate a new sequence by adjusting the pitch sizes (hence pitch ratio and even the number of each size present in a sequence by using an application of genetic algorithms (GA's)).

Their work led to a form of tread sequencing that ultimately would take two parent sequences of which were considered "most fit" or desirable based on a tournament selection, wherein fitness is determined from the amplitude of the maximum harmonic (lower is better) as a primary constraint, but not necessarily the only constraint, and from these parents create "offspring" these offspring were created with "1-point crossover" as described below and excerpted from their paper.

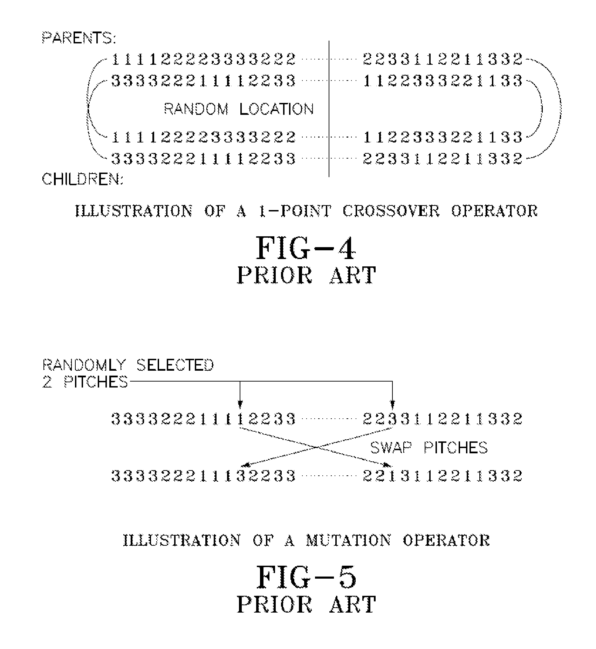

"Offsprings are created with "1-point crossover" of the parent sequences. This operator is illustrated in prior art Fig. 4. In order to avoid end effects we note that the sequence is actually a circular string stored for convenience with an arbitrary starting point. Therefore, the crossover operation is started by generating a random location in each parent sequence to be the new starting pitch for each offspring. A third random number is generated to determine the "crossover point" in the sequences. An offspring will match one parent up to the crossover pitch and then match the other parent's sequence for the remainder of the offspring's sequence. The crossover operator is designed to help perform a wide search across the range of possible sequences. Note the operator used here maintains the total number of pitches, but allows variation in the number of each pitch size used. This results in small changes to the length of the sequence (circumference). The variation in overall length is small (approximately $\pm$ 2%). Alternatives would be to fix the length and fluctuate the total number of pitches between solutions or to include the length and total number of pitches as part of the fitness evaluation.

Offsprings are then mutated. This operator is illustrated in prior art Fig. 5. Each offspring is given a small chance of randomly determined mutation. The mutation swaps two randomly selected (and different sized) pitches within an offspring's sequence. The further apart the selected pitches are, the greater the effect of this mutation operator is, as it causes a shift in the location of all pitches between the swapped pair. When the swapped pair is adjacent, the mutation is similar to the action of the MFM method.

The population can be considered converged when there has been no further improvement to the best solution for several generations. At this point there are generally numerous slightly different solutions with near optimal fitness, and many of these will be duplicate solutions.

A secondary fitness criterion is often useful and could be applied to this example. As the population converges, the secondary criterion affects fitness just enough to help select a final design based on the "flatness" of the spectra, pitch sequence length or some measure of manufacturability."

This genetic algorithm approach showed that mere alteration of tires with good noise patterns employing conventional noise pitch sizes and pitch ratios could be greatly improved by adopting the Genetic Algorithm approach of creating mutated offspring in the hopes of achieving near "optimal fitness".

This prior art GA technique showed a great advancement in optimizing tread pitch sequencing in an understandable methodology, however, it relied heavily on finding parental "most fit" sequences using primarily available or pre-existing sequence patterns. The authors suggest the GA technique was not without inherent "weaknesses" in the formation of the model. One major concern was the fact that "a) if a GA is implemented so that the total number of pitches used is easily changed, then the GA will converge toward an infinite number of pitches (or whatever limit is set) in order to approach a white noise spectrum, b) if a GA is implemented so that the number of pitch sizes used is easily changed, then the GA will converge toward using as many pitch sizes as possible, again to approach the white noise spectrum and c) if a poor choice of pitch ratios is given and fixed (like Fig. 4), then a GA will be unable to reduce the maximum harmonic, which will be independent of the sequences generated. The GA used here only considered harmonics less than three times the total number of pitches used."

The present invention unlike the GA approach suggests that the use of an infinite possible number of pitch sizes within an upper or lower or both constrained size extremes is not only possible, but desirable.

The primary objective of the present invention is to provide a method that uses, permits and actually encourages continuously variable pitching. The method and technique described hereinafter teaches that the computational requirements heretofore thought to be an insurmountable obstacle to such an approach are in fact remarkably within conventional computing parameters when accomplished using the method described within.

Summary of the Invention

A method of pitching a tread for a tire to achieve a satisfactory noise power spectrum according to claim 1 is disclosed. This method has the steps of: selecting an upper ($u$) and a lower ($l$) extreme of pitch ratios; permitting continuously variable pitch ratios to exist between the upper (u) and lower ($l$) extreme of pitch ratios; and conducting an optimization of continuous variables between and including the two selected extremes of pitch ratios. In this method, the pitch length of each tread element or tread section can be different in length to control noise and uniformity harmonics.

The method may include other optimization steps in a combinatorial fashion such as using an integer programming formulation that determines discrete values of pitch ratios to get a pitch sequence, using genetic algorithm (GA) programming; or any other combinatorial optimization technique.

A preferred method has each pitch $P_i$ assigned a variable $?_i$ and the pitch ratio is assigned to be a linear average of the upper and lower extreme pitch variation with

$$\text{Pitch ratio} = \quad ?_i * (\text{lower extreme pitch ratio}) \quad + $$
$$(1 - ?_i) \ * (\text{upper extreme pitch ratio})$$

where the variable $?_i >= 0$ and $?_i <= 1$. The total number (NP) of pitches in a tread of a tire equals the total number of variables $?_i$.

The preferred method satisfies one or more of the following relationships: The number of the upper extreme pitch ratios is allowed to be greater than 1; or the number of the lower extreme pitch ratios is allowed to be greater than 1. The method may further include the step of fixing the lower extreme pitch ratio (l) to a pre-selected location in a pitch sequence thereby reducing ? to = 1 at said location, wherein the total number of variables $?_i$ equals the total number of pitches minus 1, or fixing the upper extreme pitch ratio (u) to a pre-selected location in a pitch sequence thereby reducing $?_i$ to = 0 at said location, wherein the total number of variables $?_i$ equals the total number of pitches minus 1. Additionally, the method may further include the steps of constraining a pitch sequence to avoid a large pitch length next to a small pitch length, or constraining a pitch sequence in such a way that no more than three adjacent pitches are of the same length.

Dependent claims refer to preferred embodiments of the invention.

Definitions

As used herein and in the claims, the following terms are intended to mean:

"Pitch" also known as "tread design element" means a section of the tread in the circumferential direction which is repeated around the outer circumference of the tire, but with possibly varying length. Normally, a pitch contains a load-bearing element and an adjacent groove which separates adjoining load-bearing elements in a tire tread. However, the boundaries of a pitch in the circumferential direction may bisect a load-bearing element or adjacent groove, depending on the point on the boundary in the axial direction. Even so, each pitch generally contains the total of at least one load-bearing element and at least one groove, but it may consist of two fractions which total one complete element or groove.

"Pitch ratio" means the ratio of the longest design element length to the shortest element cycle length.

"Pitch sequence" means the particular arrangement of pitches around the full circumference of the tread.

"Pneumatic tire" means a laminated mechanical device of generally toroidal shape (usually an open torus) having beads, a carcass ply and a tread.

Brief Description of the Drawings

The invention will be described by way of example and with reference to the accompanying drawings in which:

FIG. 1 is a plan view of a portion of an exemplary pitched tread pattern tire.

FIG. 2 is a schematic view of a portion of the circumference of the tire of FIG. 1 showing an exemplary pitch sequence.

FIG. 3 is a view showing a large pitch and a small pitch.

FIG. 4 is a prior art schematic of a Genetic Algorithm generated pair of parental sequences.

FIG. 5 is a prior art schematic of an offspring generated using a Genetic Algorithm approach to pitch sequencing.

FIG.'s 6 - 9 are exemplary charts showing an exemplary prior art 73 pitch sequence having four pitch sizes PJW73@4W and compares that sequence to a 73 continuous variable pitch sequence CVP73 according to the present invention.

FIG. 6 is a chart showing PJW73@4W and targeted harmonics.

FIG. 7 is a chart showing PJW73@4W vs. CVP73.

FIG. 8 is a chart showing CVP73: pitch sequence distribution.

FIG. 9 is a chart showing CVP73: local pitch ratio.

FIG.'s 10 - 13 are exemplary charts showing an exemplary prior art 72 pitch sequence having five pitch sizes PJW72@5W and compares that sequence to a 72 continuous variable pitch sequence CVP72 according to the present invention.

FIG. 10 is a chart showing PJW72@5W and targeted harmonics.

FIG. 11 is a chart showing PJW72@5W vs. CVP72.

FIG. 12 is a chart showing CVP72: pitch sequence distribution.

FIG. 13 is a chart showing CVP72: local pitch ratio.

Detailed Description of the Invention

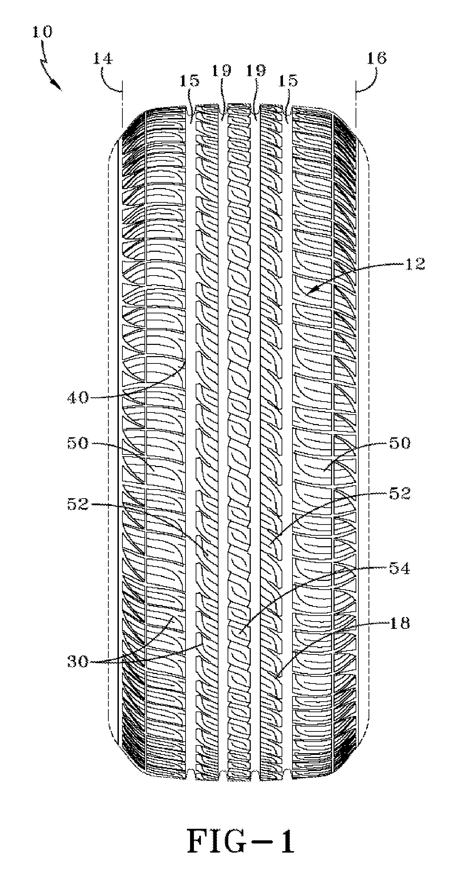

In FIG. 1, an exemplary tread 12 according to the present invention is illustrated. The tread 12 when configured angularly as when attached to a tire 10 is adapted to rotate about an axis.

The tread 12 extends circumferentially about a tire 10. The tread 12 extends laterally between a first and second lateral edge 14 and 16, respectively. The tread 12 has a plurality of road contacting relief elements hereinafter called tread elements 50. The tread elements 50 or pitches are positioned on the tread in a pattern commonly referred to as the tread pattern. The tread elements 50 are separated by grooves 15, 17a, 17b, 18 and 19. The tread elements 50 are defined by circumferential grooves 15, 19 and lateral grooves 17a, 17b, 18. The center of the tread can have relief elements that can include circumferential ribs 52, 54. Typically a rib 52, 54 may be a zigzag configuration, straight or sinusoidal in shape. Whether the tread elements 50 are block elements or a combination of block elements and ribs, there exists a generally repeating pattern of tread design elements. This repeating pattern is commonly called a pitch sequence.

A pitch is a single occurrence of a tread element design repeated circumferentially around the tread with possibly varying length of the design element. Typically, each pitch P has a length defined by a specific circumferential length of repeating design features, the length commonly being known as a pitch length.

Variation of the pitch lengths around the circumference of the tread 12 is possible to improve the noise generated by the tire during normal use. The variation and arrangement of lengths of pitches around the circumference of the tread is called as the pitch sequence. The pitch lengths establish the number of pitches P that may be employed around the tread. Typically passenger tires have 30 to 120 pitches, preferably from 40 to 80. For a given pitch P in a pitch sequence, the pitch ratio for such pitch is the ratio of its pitch length to the length of the shortest pitch in the sequence. The pitch ratio of the longest pitch to the shortest pitch for passenger tires is typically between 1.14 and 1.86.

Airborne tire noise generated within the tread near the contact patch may be modified by acoustic resonances of the void network created by the grooves of the tread design within the contact patch 20. The filtering effect of the void network acts to amplify noise near the network resonance frequencies. This may make the noise particularly loud and annoying when noise generation frequencies match void resonance frequencies. This invention is directed to reduce the effect of resonance frequencies by employing a unique continuous pitching method.

In tire design, tread blocks 50 and the lateral grooves 17a, 17b that separate them are known generators of noise. As the tire rotates, these tread design elements enter and leave contact with the road creating signature noise pulses. If all design pitches P are of equal size a tonal noise is created at frequencies proportional to the tire rotation rate (speed) of the tire as a result of the regular occurring events created by having all the pitches of the same size. This annoying tonal noise may be reduced by employing different size pitches in a sequence to mix up the noise pulse event timing of noise generation, thereby smearing the sound energy over a range of frequencies and reducing the tonality of the generated tire noise.

US-A- 2005/0006015, which is incorporated by reference herein in its entirety, is directed to addressing another aspect of the tire noise system which is the acoustic resonance of the air space void network in the tire contact patch 20 coupled with the surrounding air. In many tire designs employing ribs 52, 54, this void resonance is comprised primarily of the tubes created by the circumferential grooves 15, 19 of the tire sealed by the road surface within the tire contact patch 20. The acoustic resonance of these tubes formed by the circumferential grooves 15, 19 is often dominated by their length. The length of the circumferential groove 15, 19 while in the contact patch and the end impedances of the acoustic horns created by the tire and the road surfaces are the dominant features creating this acoustic resonance. Lateral grooves 17a, 17b, 18 in the adjacent ribs 50, 52, 54 which intersect the circumferential grooves act as acoustic branches. The effect of an open-ended branch, a lateral groove 17a which connects the circumferential groove 15 to the air space at the side of the tire is to increase the resonance frequency of the tube/branch network. The amount of resonance frequency increase depends upon the circumferential position of the branch or lateral groove 17a along the tube or circumferential groove, the maximum occurs when the branch or lateral groove 17a is at the middle of the tube. This increase is resonance frequency is also dependent on the tube/branch lengths and the cross-sectional areas of the groove voids. A closed end branch or lateral dead ended groove 17b that extends off of the circumferential groove 15 acts to decrease the resonance frequency in a similar manner dependent upon the position and geometry of the grooves within the contact patch. As a tire turns and the lateral groove or branch 17a, 17b moves through the contact patch 20, the branch or lateral groove position will modulate the resonance frequency resulting in a smearing of the resonance. However, in most passenger tire designs, there are several pitches P in the contact patch 20 at one time. The compound effect of several lateral grooves or branches along the circumferential groove is to change the resonance frequency, but modulation range is reduced because at any time there is a most effective branch near the mid-length position of the circumferential groove 15 or tube. The branch geometry within the contact patch 20 is effectively nearly uniform as the tire rotates. A primary point of the invention of US-A- 2005/0006015 was to overcome this multiple pitch P within the contact patch as a function of the lateral groove geometry which generates its own near uniformity.

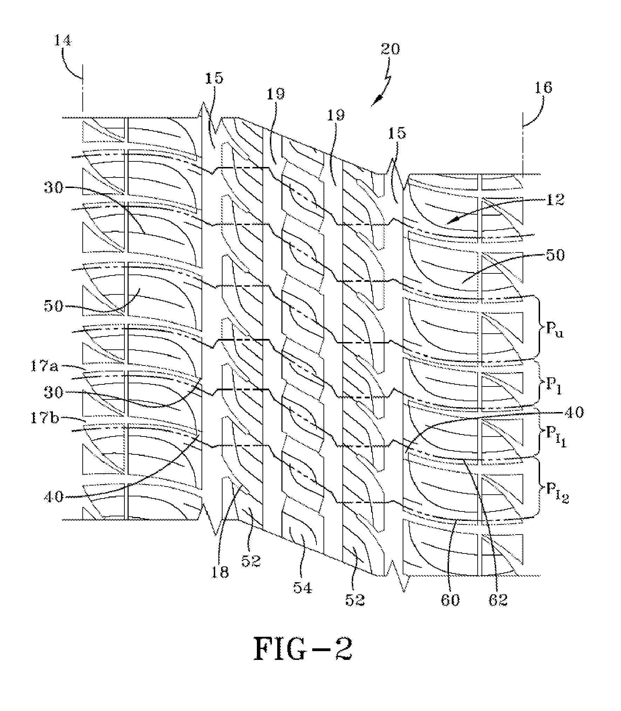

For the purpose of clarification, the term passenger tire 10 is intended to include tires for passenger vehicles and light trucks having a tread with a net gross ratio in the range of 50 to 80%. The exemplary tread 12 illustrated in FIG. 1 has a net to gross ratio of approximately 64%. The tread 12 as further illustrated in FIG. 2 has pitches Pl, Pu and $Pl_i$, extending from a first lateral edge 14 through the central portion of the tread 12 to the second lateral edge 16. According to the present invention each pitch has first and second pitch boundaries. These pitch boundaries define the circumferential extent of a pitch, the first and second pitch boundaries for the pitch P being designated 60, 62. The pitch boundaries as illustrated extend across the tread 12 in a nonlinear fashion. In some tires, the treads 12 may have the pitch boundaries 60, 62 extending 90° to the circumferential direction and changing simply in circumferential length. Alternatively, as illustrated in FIG. 2, these pitch boundaries may follow an irregular pattern along the block edges and follow some of the lateral grooves traversing along the tread pattern. Nevertheless, as illustrated each of the pitches P when stacked against the other one form a uniform and cohesive tread pattern albeit of different circumferential lengths.

As reported in Hoffmeister et al. on Tread Pitch Optimization, tread pattern noise, commonly referred to as tread whine, is created by a tire tread as the tire rolls across the road surface. The frequency spectrum of the noise expected can be determined as a function of the pitch sequence using known methods. A tire with an ideal pitch sequence would generate noise across a wide frequency band with the amplitude of no one frequency much greater than any other frequency. This preferred form of noise is often referred to as "wideband noise" or "white noise." Wideband noise is preferable because a good portion of energy from this type of spectrum blends with background noises. Of course, the ideal form is worth striving for, but may be impractical due to mold cost, construction difficulties, or compromising of other tire performances.

Prior art or conventional tire tread pitch sequences have been defined from four basic parameters:

    1. Number of unique pitch sizes, usually <=3,
    2. Ratio of smallest pitch size to each pitch size,
    3. Total number of pitches present of each pitch size, and
    4. The order in which pitches are arranged.

A pitch was defined earlier as the smallest geometrical unit that can be duplicated to create the entire tread of a tire as shown in Fig.1. The size of a pitch is measured along the tire's circumference, typically in the middle of the tread band. Often the tread design begins with a "nominal" pitch size determined by dividing the tire's circumference by the desired total number of pitches (parameter 3). The nominal pitch is rarely produced, but serves instead as a reference to scale the other sizes.

Copies of the pitch shown can be strung together to begin building a simple sequence. Some patented methods of pitch sequencing focus only on a band of harmonics around this fundamental harmonic.

Since there is a direct manufacturing cost associated with the number of pitch sizes, the number of unique sizes (parameter 1) is often limited to two or three sizes. Increasing the number of sizes is one of the easiest ways to reduce noise and spread the harmonic spectrum. Low noise tires often use as many as five or six pitch sizes.

The pitch ratio (parameter 2) is critical to how evenly the harmonics can be spread. Previous researchers have shown the importance of pitch ratio, noting that if they are chosen as the ratio of integers (like 3/2), then the pitches work together to create very strong high-order harmonics that are independent of the pitch sequence.

Finally the total number of pitches used (parameter 3) and the order in which they are arranged to make up a tire's rolling circumference (parameter 4) defines the pitch sequence.

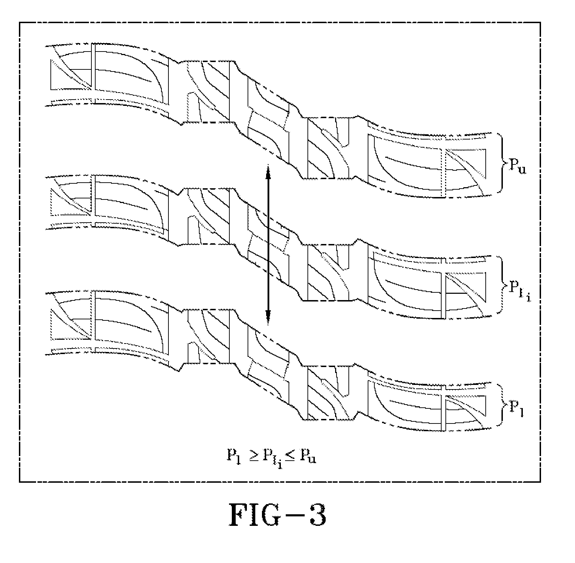

This selection of pitch ratios was based on the fact that integer ratios typically as an example 7, 9 and 11 were selected and those ratios were placed in a sequence to achieve an optimization of the tread pattern noise. Historically three pitch ratios were employed, however, in more sophisticated or luxurious tires as many as four and five pitch ratios were employed and increases in the number of pitches around a tire were also used in order to achieve a quieter tire. The use of integers enabled the program to select optimizations based on computational power of the computers and as a result the fewer the number of ratios the easier the computational requirements. An interesting aspect of the present invention is that the pitch sequence can be established by fixing the largest size pitch ratio and the smallest size pitch ratio and allowing all the intermediate pitches to vary continuously and to be variables. By using this technique it has been found that the computational requirements are in fact simpler in that the optimal pitch pattern sequence can be obtained using conventional computers and optimization software that is commercially available. In the present invention MATLAB® software is employed which can be found at www.mathworks.com and the fmincon optimization program was employed wherein the computational utilization of variables between two fixed points is easily handled. This is counter intuitive to the normal methods used in pitching a tire wherein one conceives a large number of pitches would increase the computational requirements, however, by allowing these intermediate pitches $PI_i$ to be varied as disclosed in the present application where $P/$ is less than or equal to any variable intermediate pitch $PI_i$ and $P u$ is greater than or equal to any variable intermediate pitch $PI_i$ as shown in FIG. 3, the optimization programs can achieve results in a very timely and satisfactory manner.

This is not to say that conventional learning of pitch ratios in tires to reduce noise is not employed, in fact to the contrary it has been determined over time that pitch ratios from the largest to the smallest should not vary by more than 200%. Preferably greater than 114% to less than 186% and more preferably between the ranges of 140% and 160% from smallest to largest. Using these factors, the present inventors could fix the smallest ratio relative to the largest pitch ratio in such a fashion that they had reasonable predictability of the tire harmonics within these extremes or ranges and they then allowed all the intermediate pitches $PI$ to vary continuously. As the program progressed in its calculations local optimums would be found. These local optimums would demonstrate certain noise and harmonic characteristics and a noise spectrum that could be calculated and easily predicted. Once a local optimum was found it could then be modified by using computational or combinatorial methods using fixed integer programming or genetic algorithms to further optimize the pitch sequence. As a result of these findings the present method of pitching a tire now can be achieved by using the methods described in the appended claims and recited herein below.

A method of pitching a tread for a tire to achieve a satisfactory noise power spectrum has the steps of: selecting an upper (*u*) and a lower (*l*) extreme of pitch ratios; permitting continuous variables of pitch ratios to exist between the upper (*u*) and lower (*l*) extreme of pitch ratios; and conducting an optimization of continuous variables between and including the two selected extremes of pitch ratios; wherein the pitch lengths of each tread element can be different in length to control noise and uniformity harmonics. The method may include other optimization steps in a combinatorial fashion such as using an integer programming formulation that determines discrete values of pitch ratios to get a pitch sequence, using genetic algorithm (GA) programming; or any other combinatorial optimization technique.

A preferred method has each pitch $P_i$ assigned a variable $?_i$ and the pitch ratio is assigned to be a linear average of the upper and lower extreme pitch variation with

$$\text{Pitch ratio} = \ ?_i{}^* \ (\text{lower extreme pitch ratio}) \ + $$
$$(1 - ?_i) \ ^* \ (\text{upper extreme pitch ratio})$$

where the variable $?_i >= 0$ and $?_i <= 1$. The total number (NP) of pitches in a tread of a tire equals the total number of variables $?_i$.

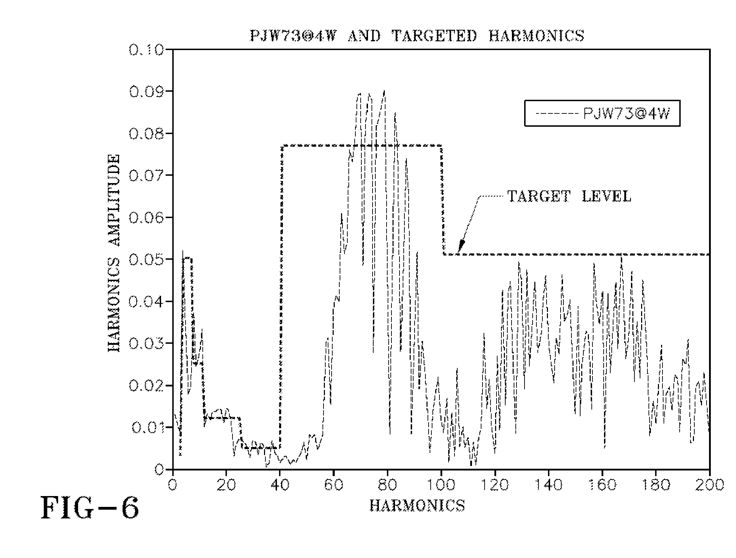

FIG.'s 6 -9 are charts for a 73 pitch example. FIG. 6 is a chart showing 200 Fourier Harmonic values of an existing sequence with 4 pitch ratios = {7, 8, 9,10} and in dashed lines the target levels established as goals for the optimization. The goal of the continuously variable pitching optimization is to reduce levels to the target range.

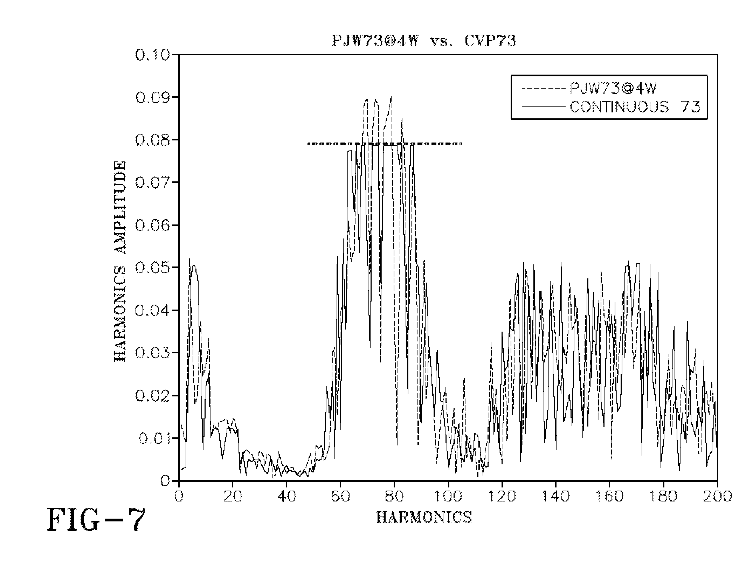

FIG. 7 shows in dashed lines the Fourier Harmonic values of an existing sequence with 4 pitch ratios = {7, 8, 9, 10} and in solid lines the optimized continuously variable sequence which reduced the harmonic amplitude levels to the target, beyond what could be achieved with only 4 pitches.

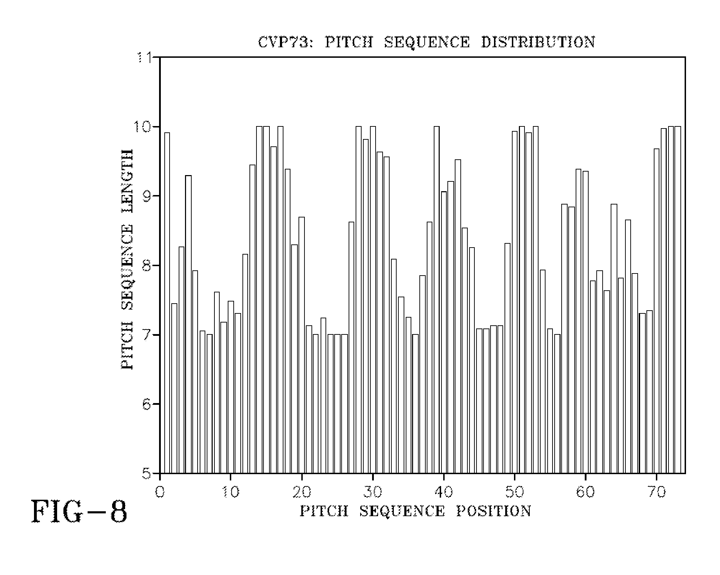

FIG. 8 shows in bar chart form the pitch ratios for the actual 73 pitch sequence. Each bar indicates the length of the pitch ratio. The lower bound was 7, and the upper bound was 10.

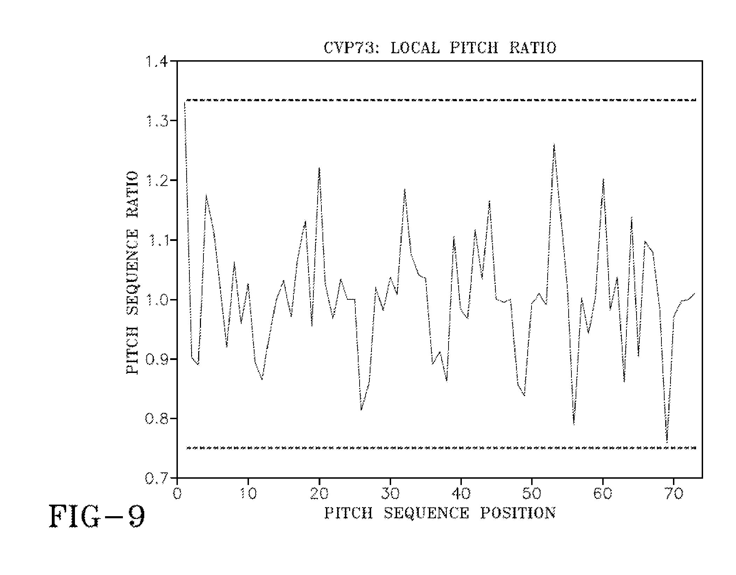

FIG. 9 shows the ratio in chart form the ratio gotten by dividing a pitch ratio value by the pitch ratio before it in the sequence. It is another way of specifying no large pitch next to a small one.

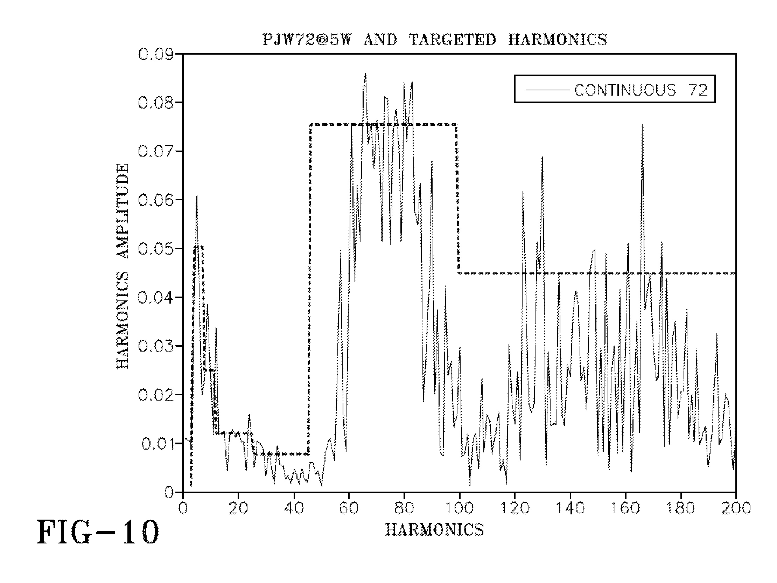

FIG.'s 10-13 are charts for a 72 pitch example. FIG. 10 is a chart showing 200 Fourier Harmonic values of an existing sequence with 5 pitch ratios = {7, 8, 9,10,11} and in dashed lines the target levels established as goals for the optimization. The goal of the continuously variable pitching optimization is to reduce levels to the target range.

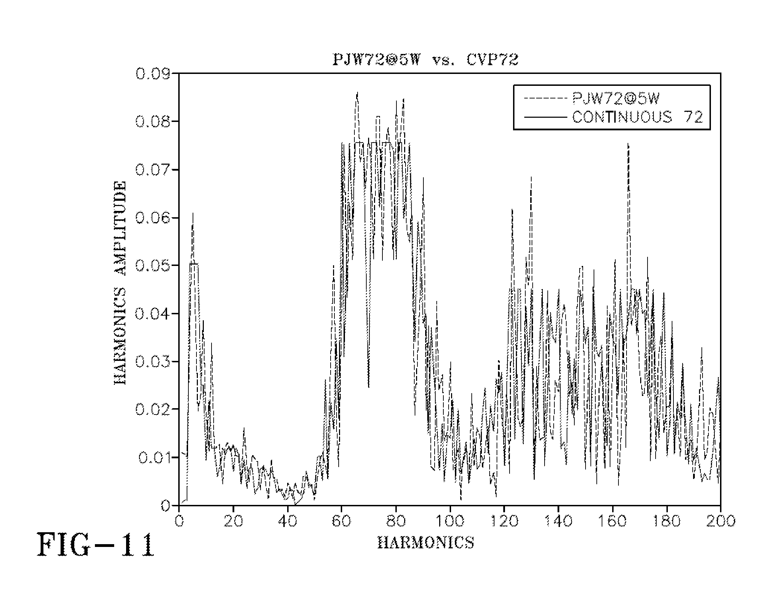

FIG. 11 shows in dashed lines the Fourier Harmonic values of an existing sequence with 5 pitch ratios = {7, 8, 9, 10, 11} and in solid lines the optimized continuously variable sequence which reduced the harmonic amplitude levels to the target, beyond what could be achieved with only 5 pitches.

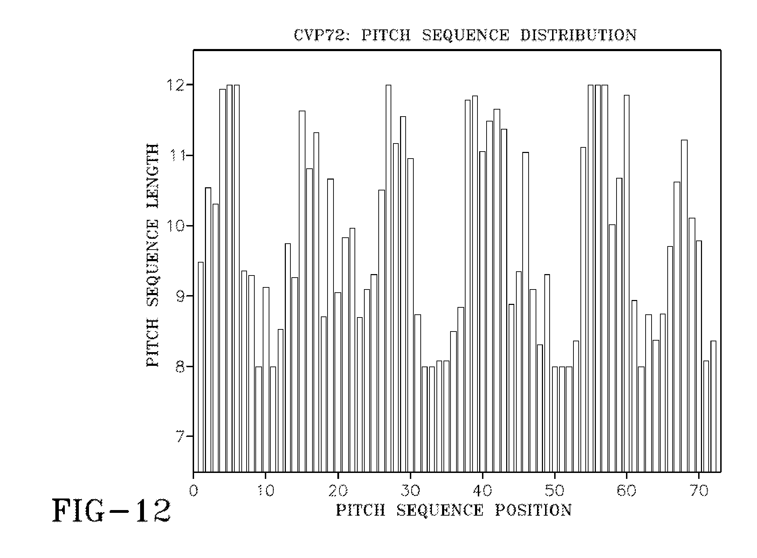

FIG. 12 shows in bar chart form the pitch ratios for the actual 72 pitch sequence. Each bar indicates the length of the pitch ratio. The lower bound was 8, and the upper bound was 12.

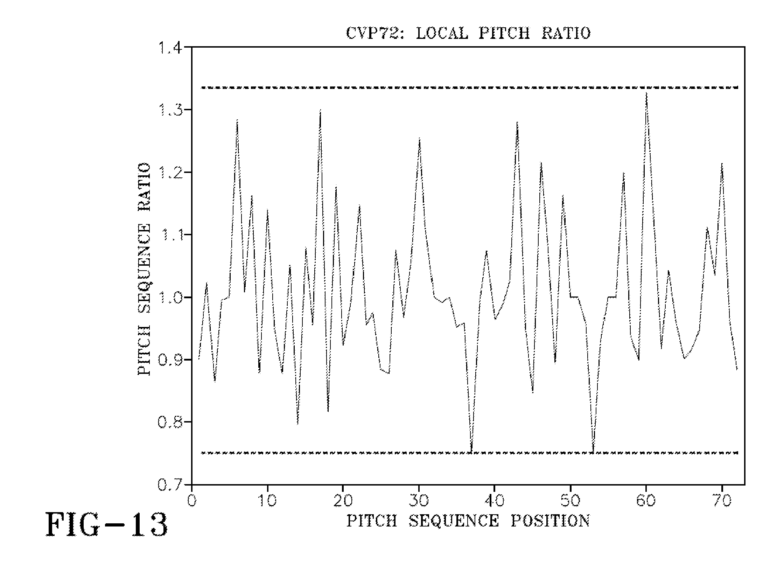

FIG. 13 shows the ratio in chart form the ratio gotten by dividing a pitch ratio value by the pitch ratio before it in the sequence. It is another way of specifying no large pitch next to a small one.

Tables 1 and 2 as shown below are examples of a continuous variable pitch sequence in a 72 pitch and a 73 pitch according to the present invention. The CVP 72 sequence shown in Table 1 has the lower bound or extreme pitch ratio P I set at 8 and the upper bound or extreme pitch ratio P u set at 12. The CVP 73 sequence has the lower bound or extreme pitch ratio P/set at 7 and the upper bound or extreme pitch ratio P u set at 10.

Optimizations, as shown in Tables 1 and 2, can be done with all NP pitches allowed to be continuously variable, i.e. the total number (NP) of pitches in a tread of a tire equals the total number of $?_i$. This can be made more efficient by fixing one tread design element to be the smallest pitch ratio. Alternately, the fixed element could also be the largest ratio.

In the continuous variable pitching case, there can be several locations at which the pitch ratio turns out to be constrained to the upper or lower limit as a result of the optimization. In Table 1, elements {32, 50, 51, 52} are at the lower limit of 8; while elements {6, 55, 56, 57} are at the upper ratio limit of 12. In Table 2, although several pitches are microscopically close to the boundaries, only pitch number 24 is exactly at the lower limit of 7; while none are at the upper limit. Therefore at least one location, or tread design element, on the tire is fixed to one of the limits. In practice, the shortest pitch is used. The optimization then treats the other {NP-1} tread lugs are variables.

It would also be possible to fix two or more, i.e. n tread design elements, preferably adjacent elements, to be at the shortest pitch ratio; and then to optimize using only the remaining NP-2 or NP-n pitches. In the example of Table 1, three consecutive pitches of the smallest ratio, and three consecutive pitches of the largest ratio are found. However, this is not the case for the example of Table 2. Thus, the sequence can be defined as having two adjacent elements fixed to a common pitch ratio.

**Table 1**

| | | | |
|---|---|---|---|
| 1 | 9.4784951e+00 | 37 | 8.8511891e+00 |
| 2 | 1.0539237e+01 | 38 | 1.1771905e+01 |
| 3 | 1.0304430e+01 | 39 | 1.1862227e+01 |
| 4 | 1.1937741e+01 | 40 | 1.1055220e+01 |
| 5 | 1.1999976e+01 | 41 | 1.1480759e+01 |
| 6 | 1.2000000e+01 | 42 | 1.1652275e+01 |
| 7 | 9.3552736e+00 | 43 | 1.1376116e+01 |
| 8 | 9.2938135e+00 | 44 | 8.8862435e+00 |
| 9 | 8.0000000e+00 | 45 | 9.3404248e+00 |
| 10 | 9.1236462e+00 | 46 | 1.1042126e+01 |
| 11 | 8.0004727e+00 | 47 | 9.0879010e+00 |
| 12 | 8.5340827e+00 | 48 | 8.3087594e+00 |
| 13 | 9.7360595e+00 | 49 | 9.3035493e+00 |

(continued)

| | | | |
|---|---|---|---|
| 14 | 9.2642591 e+00 | 50 | 8.0000000e+00 |
| 15 | 1.1636681e+01 | 51 | 8.0000000e+00 |
| 16 | 1.0797972e+01 | 52 | 8.0000000e+00 |
| 17 | 1.1319939e+01 | 53 | 8.3566159e+00 |
| 18 | 8.7027152e+00 | 54 | 1.1114299e+01 |
| 19 | 1.0666831e+01 | 55 | 1.2000000e+01 |
| 20 | 9.0568992e+00 | 56 | 1.2000000e+01 |
| 21 | 9.8324954e+00 | 57 | 1.2000000e+01 |
| 22 | 9.9637085e+00 | 58 | 1.0016943e+01 |
| 23 | 8.6886764e+00 | 59 | 1.0670828e+01 |
| 24 | 9.0909644e+00 | 60 | 1.1859573e+01 |
| 25 | 9.3098431e+00 | 61 | 8.9429378e+00 |
| 26 | 1.0511210e+01 | 62 | 8.0003993e+00 |
| 27 | 1.1999941e+01 | 63 | 8.7251588e+00 |
| 28 | 1.1160767e+01 | 64 | 8.3765157e+00 |
| 29 | 1.1548904e+01 | 65 | 8.7437604e+00 |
| 30 | 1.0951846e+01 | 66 | 9.7093957e+00 |
| 31 | 8.7323623e+00 | 67 | 1.0614508e+01 |
| 32 | 8.0000000e+00 | 68 | 1.1219781e+01 |
| 33 | 8.0002955e+00 | 69 | 1.0113914e+01 |
| 34 | 8.0717814e+00 | 70 | 9.7836638e+00 |
| 35 | 8.0759104e+00 | 71 | 8.0621815e+00 |
| 36 | 8.4900492e+00 | 72 | 8.3630678e+00 |

## Table 2

| | | | |
|---|---|---|---|
| 1 | 9.9006908e+00 | 38 | 8.6137910e+00 |
| 2 | 7.4443573e+00 | 39 | 9.9998489e+00 |
| 3 | 8.2565846e+00 | 40 | 9.0563252e+00 |
| 4 | 9.2809946e+00 | 41 | 9.2041400e+00 |
| 5 | 7.9040503e+00 | 42 | 9.5184750e+00 |
| 6 | 7.0459852e+00 | 43 | 8.5238133e+00 |
| 7 | 7.0001158e+00 | 44 | 8.2467665e+00 |
| 8 | 7.6204749e+00 | 45 | 7.0794966e+00 |
| 9 | 7.1739845e+00 | 46 | 7.0830979e+00 |
| 10 | 7.4850032e+00 | 47 | 7.1180122e+00 |
| 11 | 7.2934463e+00 | 48 | 7.1204371e+00 |
| 12 | 8.1569853e+00 | 49 | 8.3152426e+00 |
| 13 | 9.4432396e+00 | 50 | 9.9232806e+00 |
| 14 | 9.9999138e+00 | 51 | 9.9976384e+00 |

(continued)

| | | | |
|---|---|---|---|
| 15 | 9.9999377e+00 | 52 | 9.8999004e+00 |
| 16 | 9.7066574e+00 | 53 | 9.9999760e+00 |
| 17 | 9.9998941e+00 | 54 | 7.9287943e+00 |
| 18 | 9.3883076e+00 | 55 | 7.0830335e+00 |
| 19 | 8.2938255e+0 | 56 | 7.0003374e+00 |
| 20 | 8.6941370e+00 | 57 | 8.8759658e+00 |
| 21 | 7.1177401e+00 | 58 | 8.8401140e+00 |
| 22 | 7.0001809e+00 | 59 | 9.3881603e+00 |
| 23 | 7.2357313e+00 | 60 | 9.3434549e+00 |
| 24 | 7.0000000e+00 | 61 | 7.7722493e+00 |
| 25 | 7.0000064e+00 | 62 | 7.9138546e+00 |
| 26 | 7.0000205e+00 | 63 | 7.6397406e+00 |
| 27 | 8.6303098e+00 | 64 | 8.8727331e+00 |
| 28 | 9.9999842e+00 | 65 | 7.8049738e+00 |
| 29 | 9.8109399e+00 | 66 | 8.6459153e+00 |
| 30 | 9.9998756e+00 | 67 | 7.8706754e+00 |
| 31 | 9.6383628e+00 | 68 | 7.2914219e+00 |
| 32 | 9.5645354e+00 | 69 | 7.3387445e+00 |
| 33 | 8.0800079e+00 | 70 | 9.6700965e+00 |
| 34 | 7.5380855e+00 | 71 | 9.9644224e+00 |
| 35 | 7.2411726e+00 | 72 | 9.9999848e+00 |
| 36 | 7.0000686e+00 | 73 | 9.9999730e+00 |
| 37 | 7.8517544e+00 | | |

**Claims**

1. A method of pitching a tread (12) of a tire (10), the tread (12) comprising a plurality of tread design elements (50), the method comprising the steps of:

   selecting an upper extreme pitch ($u$) and a lower extreme pitch ratio ($l$);
   permitting continuous variables of pitch ratios to exist between and including the upper extreme pitch ratio ($u$) and the lower extreme pitch ratio ($l$); and
   conducting an optimization of said continuous variables between and including the two selected extreme pitch ratios.

2. The method of claim 1 wherein the circumferential lengths of each tread design element (50) can be different to control noise and uniformity harmonics and to achieve a satisfactory noise power spectrum.

3. The method of claim 1 or 2 further comprising the step of:

   using an integer programming formulation that determines discrete values of pitch ratios to get a pitch sequence.

4. The method of claim 3 wherein the integer programming formulation has a number of values ($z$) established by the number ($x$) of pitches times the number ($y$) of pitch ratios.

5. The method of at least one of the previous claims wherein each tread design element (50) is assigned a variable ($?_i$) and the pitch ratio is assigned to be a linear average of the upper and lower extreme pitch ratio (u, l) with:

$$\text{pitch ratio} = ?_i * (\text{lower extreme pitch ratio}) + (1 - ?_i) * (\text{upper extreme pitch ratio})$$

where the variable $?_i >= 0$ and $?_i <= 1$ apply.

6. The method of claim 5 wherein the total number of the tread design elements (50) of the tread (12) equals the total number of variables $?_i$.

7. The method of claim 5 or 6 wherein the number of the upper extreme pitch ratio (u) is allowed to be greater than 1.

8. The method of claim 5, 6 or 7 wherein the number of the lower extreme pitch ratio (*l*) is allowed to be greater than 1.

9. The method of at least one of the previous claims further comprising the step of constraining the pitch sequence to avoid large pitch length next to small pitch length.

10. The method of at least one of the previous claims further comprising the step of constraining the pitch sequence wherein no more than 3 adjacent pitches are the same length.

FIG-1

FIG-2

$$P_l \geq P_{l_i} \leq P_u$$

FIG-3

PARENTS:

1111222233332 22 ———— 2233112211332

33332221111 2233 ———— 1122333221133

RANDOM LOCATION

1111222233332 22 ———— 1122333221133

33332221111 2233 ———— 2233112211332

CHILDREN:

ILLUSTRATION OF A 1-POINT CROSSOVER OPERATOR

# FIG-4
## PRIOR ART

RANDOMLY SELECTED
2 PITCHES

33332221111 2233 ———— 2233112211332

SWAP PITCHES

33332221113 2233 ———— 2213112211332

ILLUSTRATION OF A MUTATION OPERATOR

# FIG-5
## PRIOR ART

PJW73@4W AND TARGETED HARMONICS

----- PJW73@4W

TARGET LEVEL

HARMONICS

HARMONICS AMPLITUDE

FIG-6

FIG-7

FIG-8

FIG—9

PJW72@5W AND TARGETED HARMONICS

FIG-10

EP 1 813 445 A1

PJW72@5W vs. CVP72

FIG-11

CVP72: PITCH SEQUENCE DISTRIBUTION

FIG−12

EP 1 813 445 A1

CVP72: LOCAL PITCH RATIO

FIG-13

**European Patent Office**

**EUROPEAN SEARCH REPORT**

Application Number

EP 07 10 1234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 717 613 A (NAKAJIMA YUKIO [JP]) 10 February 1998 (1998-02-10) * column 10, line 45 - column 22, line 67; figures 1-18 * | 1-10 | INV. B60C11/00 |
| A,D | US 2005/006015 A1 (RICHARDS TIMOTHY ROBERT [US] ET AL) 13 January 2005 (2005-01-13) * page 2, paragraph 37 - page 4, paragraph 52; figures 1,1A * | 1-10 | |
| A | US 4 474 223 A (LANDERS SAMUEL P [US]) 2 October 1984 (1984-10-02) * column 3, line 30 - column 9, line 36; figures 1-13 * | 1-10 | |
| A | DE 101 45 061 A1 (CONTINENTAL AG [DE]) 3 April 2003 (2003-04-03) * column 3, line 4 - column 5, line 28; figures 1-3 * | 1-10 | |
| A | EP 0 739 758 A (BRIDGESTONE CORP [JP]) 30 October 1996 (1996-10-30) * page 3, line 13 - page 6, line 34; figure 1 * | 1-10 | TECHNICAL FIELDS SEARCHED (IPC) B60C |
| A | US 5 769 990 A (HOFFMEISTER KURT MATTHEW [US]) 23 June 1998 (1998-06-23) * column 4, line 29 - column 7, line 7; figures 1-7 * | 1-10 | |
| A | EP 1 431 077 A (CONTINENTAL AG [DE]) 23 June 2004 (2004-06-23) * page 3, line 8 - page 5, line 1; figure 1 * | 1-10 | |

The present search report has been drawn up for all claims

| Place of search | Date of completion of the search | Examiner |
|---|---|---|
| Munich | 20 April 2007 | Lendfers, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 1234

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2007

| Patent document cited in search report | | Publication date | Patent family member(s) | | Publication date |
|---|---|---|---|---|---|
| US 5717613 | A | 10-02-1998 | NONE | | |
| US 2005006015 | A1 | 13-01-2005 | BR | 0402572 A | 24-05-2005 |
| | | | CA | 2472853 A1 | 07-01-2005 |
| | | | EP | 1495882 A1 | 12-01-2005 |
| US 4474223 | A | 02-10-1984 | NONE | | |
| DE 10145061 | A1 | 03-04-2003 | NONE | | |
| EP 0739758 | A | 30-10-1996 | JP | 8295105 A | 12-11-1996 |
| US 5769990 | A | 23-06-1998 | CA | 2152221 A1 | 22-12-1995 |
| | | | DE | 69513331 D1 | 23-12-1999 |
| | | | DE | 69513331 T2 | 23-03-2000 |
| | | | EP | 0688684 A2 | 27-12-1995 |
| | | | JP | 8040017 A | 13-02-1996 |
| EP 1431077 | A | 23-06-2004 | CA | 2453954 A1 | 20-06-2004 |
| | | | DE | 10259907 A1 | 01-07-2004 |
| | | | JP | 2004203376 A | 22-07-2004 |
| | | | US | 2004118494 A1 | 24-06-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050006015 A

**Non-patent literature cited in the description**

- **K.M. HOFFMEISTER ; J.E. BERNARD.** Tread Pitch Arrangement Optimization Through the Use of a Genetic Algorithm. *Tire Science and Technology,* January 1998, vol. 26 (1), 2-22